(19) Europäisches Patentamt
European Patent Office
Office européen des brevets

(11) **EP 4 685 819 A1**

(12) **EUROPEAN PATENT APPLICATION**

(43) Date of publication:
28.01.2026 Bulletin 2026/05

(21) Application number: 25187303.0

(22) Date of filing: 03.07.2025

(51) International Patent Classification (IPC):
*H01B 7/30* (2006.01)  *H01B 7/00* (2006.01)
*B60R 16/02* (2006.01)  *H01R 4/64* (2006.01)
*H01R 11/12* (2006.01)

(52) Cooperative Patent Classification (CPC):
**H01B 7/303; B60R 16/02; H01B 7/0009;**
H01R 4/64; H01R 11/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 25.07.2024 EP 24190914

(71) Applicant: **VOLVO CAR CORPORATION**
**405 31 Göteborg (SE)**

(72) Inventors:
• **FORSBERG, Fredrik**
**431 46 MÖLNDAL (SE)**
• **POPESCU, George Stefan**
**418 71 GÖTEBORG (SE)**

(74) Representative: **Kransell & Wennborg KB**
**P.O. Box 2096**
**403 12 Göteborg (SE)**

(54) **ELECTRICAL GROUNDING CONDUCTOR AND METHOD FOR GROUNDING A GROUNDING SYSTEM OF A VEHICLE**

(57) The current disclosure relates to an electrical grounding conductor for a vehicle, the electrical grounding conductor comprising a first terminal and a second terminal, the first and second terminals being electrically conductive; and a plurality of individually insulated multi-strand wires electrically connected in parallel between the first terminal and the second terminal; wherein a number and diameter of the individually insulated wires are configured to provide a low impedance at high frequencies between the first terminal and the second terminal. The disclosure further relates to a grounding system for a vehicle and a method for grounding a grounding system.

# Fig. 3

## Description

### Technical Field

The current disclosure relates to an electrical grounding conductor for a vehicle, the electrical grounding conductor comprising a first terminal and a second terminal, the first and second terminals being electrically conductive; and a plurality of individually insulated multi-strand wires electrically connected in parallel between the first terminal and the second terminal; wherein a number and gauge of the individually insulated multi-strand wires are configured to provide a low impedance at high frequencies between the first terminal and the second terminal. The disclosure further relates to a grounding system for a vehicle and a method for grounding a grounding system.

### Background Art

In automotive design, the electrical systems of a vehicle include numerous electrical components, each relying on the car body (chassis) as a ground reference. Achieving effective electromagnetic compatibility (EMC) within the vehicle requires that all electrical components be connected to a metal structure and then all the metal structures are connected together with low impedance, forming a single, unified ground plane of a grounding system.

Ordinary one-piece wires are conductors that fail to successfully address the EMC requirements due to their susceptibility to the skin effect, which is the tendency of an alternating electric current (AC) to concentrate near the surface of the conductor. The skin effect intensifies with increasing AC frequency, leading to a smaller effective conductive area. To achieve low impedance, a one-piece wire would need a large diameter, which presents mechanical and installation limitations.

Metal braided straps are typically used to connect metallic body parts to form the unified ground plane in vehicles and other machinery, including aerospace, communication, and industrial automation systems. These braided straps achieve relatively low impedance at high frequencies by mitigating the skin effect. Braided straps consist of many insulated strands woven together in a precise pattern. This arrangement of the strands causes that the total AC current is distributed equally among the strands. Consequently, braided straps do not experience the same increase in AC resistance due to the skin effect as a one-piece conductor of equivalent cross-sectional area would.

However, braided straps possess limitations in terms of environmental and mechanical durability. Over time, braided straps are prone to degradation due to exposure to harsh conditions and mechanical stress, leading to breakages and loss of connection between ground planes, thereby deteriorating EMC performance. It would thus be desirable to provide an improved conductor that at least partially overcomes some of the inconveniences of the prior art.

### Summary

According to a first aspect, the current disclosure relates to an electrical grounding conductor for a vehicle, the electrical grounding conductor comprising a first terminal and a second terminal, the first and second terminals being electrically conductive; and a plurality of individually insulated multi-strand wires electrically connected in parallel between the first terminal and the second terminal; wherein each individually insulated multi-strand wire comprises a plurality of individual strands arranged in parallel..

In this context, each insulated multi-strand wire typically comprise a conductive core consisting of a plurality of strands, which allows for the transmission of electrical current, encased within a non-conductive wrapping that provides insulation. The strands of the conductive core are typically made from a metal such as copper or aluminum, while the non-conductive wrapping may be composed of materials such as plastic or rubber. The first terminal and the second terminal are electrically conductive components that allow the connection of the insulated wires to external elements, such as grounding structures. These terminals ensure efficient electrical contact and typically comprise materials with high electrical conductivity, such as metals.

The electrical grounding conductor is versatile in its application, suitable for use not only in vehicles but also in other systems where the connection of two or more ground planes is necessary. In this context, a ground plane serves as a reference voltage for multiple electrical components, typically consisting of a metallic structure to which various electrical components are connected. By virtue of its low impedance, the electrical grounding conductor facilitates the electrical interconnection of these ground planes, allowing them to function electromagnetically as a unified ground plane. This unified ground plane contributes to effective electromagnetic compatibility (EMC) within the system. Depending on the application and/or system, the number and diameter of the individually insulated wires are adapted to provide low impedance at high frequencies as described further below.

From an electrical perspective, the electrical grounding conductor mitigates skin effects by using the plurality of individually insulated multi-strand wires electrically connected in parallel to the first and second conductive terminals. By virtue of the electrical parallel connection between the insulated wires and the terminals, the total AC is collected at one terminal, conducted to the insulated wires where the AC is distributed among them, and then converges again at the other terminal to sink to ground. Thus, this configuration allows the insulated wires to provide separate electrical pathways for the AC to flow between the terminals, resulting in a reduction of the skin effect in each insulated wire during AC conduction. Consequently, low impedance at high frequencies is achieved.

From a mechanical and environmental perspective, the individually insulated multi-strand wires inherently prevent corrosion and are easier to fixate to customised first and second terminals than a braided strap. Furthermore, since the electrical grounding conductor preferably includes substantially less strands compared to a braided strap, the electrical grounding conductor provides higher mechanical flexibility, withstanding higher mechanical stresses and harsh environmental conditions, ensuring durability in various applications. Electrical and mechanical tests reveal that the electrical grounding conductor with tailored number and diameter of the insulated wires results in low impedance at high frequencies comparable to that of a typical metal braided strap but with a substantially improved mechanical flexibility and durability. Furthermore, the electrical grounding conductor may offer cost savings, being producible from readily available individually insulated multi-strand wires and including an easily adaptable structure. For example, it may be possible to use the same type of wires as the one used in a vehicle harness. The individually insulated multi-strand wires may also be referred to herein as simply "wire" to improve legibility.

In comparison, a Litz wire where each strand is individually insulated could be made smaller compared to the described multi-strand wires with similar electrical properties due to thinner insulation layers, for example in the form of a varnish. However, a Litz wire is typically more fragile and requires a different and more complex manufacturing process compared to other harnesses in the vehicle, which would drive cost and likely also limit the amount of possible suppliers. Multi-strand wires are preferable in applications where mechanical robustness is needed at a lower cost. Even though the diameter of the described wire may be larger, the additional size is typically not a problem in the present application. A common use case for Litz wire is in high frequency inductors and transformers where the wires may have hundreds of individual conductors so that the size of the wire becomes critical. On the other hand, mechanical robustness is less critical since the wire usually is fixed and protected inside the component. Accordingly, the described wire is preferred over a Litz wire in the present application for a number of reasons.

According to a preferred embodiment, each of the plurality of individually insulated multi-strand wires has substantially the same diameter and length. That is, all the individually insulated wires have nearly the same diameter and length with respect to each other. This facilitates the production of the electrical grounding conductor and aids in tailoring the number and diameter of the insulated wires. The diameter of an insulated wire may be selected for an upper frequency limit. Alternatively, the plurality of individually insulated wires may have varying diameters relative to each other, for example by varying the number of strands in each individual wire. Varying diameters may offer flexibility in adapting the electrical grounding conductor to different frequencies within the frequency spectrum to be used. Moreover, the plurality of strands may be substantially parallel within each individual multi-strand wire, thereby simplifying manufacturing and eliminating the need for twisted or braided wires.

Ensuring safety and EMC requires maintaining the impedance of the electrical grounding conductor at the lowest feasible level. Particularly to decrease potential risk of resonance within the metal structures commonly found in vehicles. According to an embodiment, the electrical grounding conductor may have an impedance of less than 10.0 ohms per 300 mm at high frequencies, preferably less than 5.0 ohms per 300 mm, more preferably less than 1.0 ohm per 300 mm. This aligns with established EMC requirements (e.g., ECE-R10) aimed at minimizing differential voltages between ground planes, particularly at high frequencies. The skilled person will recognize that this impedance is specifically relevant when conducting AC with a typical high-frequency bandwidth encountered in the automotive industry (e.g., between 150KHz and 100 MHz) to which the electrical grounding conductor may be subjected, and that a similar configuration of the electrical grounding conductor will exhibit lower impedance when conducting direct current (DC). For instance, an electrical grounding conductor with an impedance of approximately 5 ohms per 300 mm when conducting AC at high frequencies (e.g., around 10 MHz) will likely present substantially lower impedance when conducting DC, for example, less than 3 milliohms. Some markets may have more strict EMC requirements. The electrical grounding conductor may have an impedance of less than 10.0 ohms per 300 mm preferably within a bandwidth from 10 MHz to 100 MHz, and/or less than 5.0 ohms within a bandwidth from 150 kHz to 10 MHz.

In an embodiment, the plurality of individually insulated wires may be arranged in parallel to each other between the first and the second terminals without weaving or interlacing. This eases the production of the electrical grounding conductor. Weaving or interlacing may require the insulated wires to be of different lengths to achieve a straight neutral position of the electrical grounding conductor.

According to an embodiment, in the straight neutral position, the plurality of individually insulated wires are aligned parallel to each other as a bundle without torsional deformation of the bundle. It is preferred that the electrical grounding conductor has a straight neutral position in which the plurality of individually insulated wires extend substantially linearly, with the terminals located on opposite ends along a longitudinal axis. Therefore, the wires are preferably not twisted, as this could complicate the production process unnecessarily. Furthermore, twisting the wires may not be needed, as the electrical grounding conductor is not intended for conducting differential signals.

In an embodiment, an outer surface of each of the individually insulated wires contacts at least an outer surface of one of the other individually insulated wires, preferably at an end section of the wires. Advantageously, this provides compactness to the electrical grounding conductor, minimizing unnecessary separation in between two or more of the plurality of insulated wires.

Due to the arrangement of the individually insulated wires, the electrical grounding conductor easily bends and flexes in three dimensions, providing multiaxial flexibility. That is the electrical grounding conductor may have similar bending stiffness over the longitudinal axis (lengthwise), the transverse axis (widthwise), and the vertical axis (up and down), which ensures that the electrical grounding conductor can adapt to various installation environments and withstand movements and vibrations in all directions without compromising its integrity. This is superior to metal braided straps, which have higher bending stiffness along the transverse axis compared to the longitudinal and vertical axes, thereby limiting their adaptability.

The first and second terminals may be connected to respective opposite end sections of the individually insulated wires in any suitable manner that provides a secure connection capable of withstanding mechanical forces while maintaining electrical conductivity and the required low impedance. An end portion of the first and second terminal may connect with a respective end section of each of the individually insulated wires at an interface. This facilitates a stable mechanical connection. In a preferred embodiment, the individually insulated wires are bundled at least at the interface. Advantageously, this bundling may further facilitate the electrical parallel connection of the insulated wires between the terminals since the insulated wires may be in physical proximity with each other. In a further preferred embodiment, the conductive cores of the insulated wires are bundled at the interface. This may be achieved, for example, by removing insulation materials at the tips of the insulated wires to further facilitate electrical conductivity and the convergence of the alternating current (AC) at the terminal.

Additionally, bundling of the insulated wires provide the interfaces a cross-sectional boundary with a compact shape. In this context, the term "compact shape" denotes a shape in 2D that have similar total length and height as opposed to "elongated shapes" that have a substantially greater length or height than their respective height or length. This configuration at the interface simplifies the manufacturing process, as it requires simpler tools to connect the terminals to the insulated wires compared to connecting the terminals to a metal braided strap, which typically has many strands and an elongated cross-sectional shape. Additionally, this configuration facilitates the fitting of a wider variety of protective materials. The skilled person will recognize that the higher the number of insulated wires, the more the boundary may approximate a circular shape. However, this is not required, as the insulated wires may be bundled approximating other compact shapes, such as a square or pentagon, etc.

In a further embodiment, the electrical grounding conductor may comprise a protective sheath covering at least the end portion of the first and second terminal and the respective end section of the individually insulated wires, thereby providing a watertight connection between the first and second terminals and the individually insulated wires. The cover sheath may be fitted in such a way that it minimally affects the bending stiffness of the electrical grounding conductor. The protective sheath improves the durability of the electrical grounding conductor by further preventing corrosion due to potential contact with water without affecting the electrical and mechanical performance. This is superior to metal braided straps, which are prone to corrosion or, when equipped with protective sheaths, often exhibit reduced bending flexibility in efforts to achieve waterproofing. The protective sheet covering at least the end portion of the first and second terminal and the respective end section of the individually insulated wires may comprise any suitable material that ensures a watertight connection. For instance, the protective sheet covering may include heat shrink tubing, insulation tubing, or tape and adhesive for sealing. In some embodiments, an additional protective sheet may cover the insulated wires along their entire length. This additional protection may be used when further protection is beneficial, such as in environments where the electrical grounding conductor is exposed to significant contact with dust, water, or other factors that may compromise the integrity of the wire insulation. The additional protective sheet may comprise any suitable material that minimally affects flexibility while maintaining its protective function. Examples of such materials include corrugated hose, a PET sleeve, a textile tape, a shrink tube, or similar materials.

To mitigate the skin effect and achieve low impedance, e.g., comparable to that of a braided strap, while maintaining a simple construction, the number of individually insulated multi-strand wires may be substantially fewer than the number of strands in a commonly used braided strap. Typical braided straps for automotive applications may consist of at least 30 strands. However, it is preferred to have more than two individually insulated multi-strand wires to maximize the conducting area of each wire. In an embodiment, the electrical grounding conductor comprises 2 to 15 individually insulated multi-strand wires, preferably 4 to 10 individually insulated multi-strand wires. This offers a balance between simplicity and performance, ensuring low impedance while avoiding the complexity of metal braided straps. The number of individually insulated multi-strand wires may be selected for a particular application and/or system. For instance, the number of individually insulated multi-strand wires may be based on the mechanical demands.

If the electrical grounding conductor is subject to movement due to relative motion between the metal structures it connects, a minimal number of multi-strand wires is typically preferred as this can provide a higher flexibility, lower weight, and it may also be easier to manufacture. Conversely, if the metal structures exhibit minimal relative movement, it might be advantageous to use a larger number of insulated wires to further improve mitigation if skin effects.

According to an example embodiment, the grounding conductor comprises a wrapped insulating cover configured to hold the plurality of individually insulated multi-strand wires together. The wrapped cover may be arranged to protect and bundle the plurality of insulated multi-strand wires between the respective end portions of the conductor, thereby providing a flexible and resilient protection for the plurality of wires. The insulating cover may for example be a woven tape, providing an increased flexibility of the grounding conductor in comparison with for example plastic and other types of solid covers. Accordingly, the wrapping can be used in combination with the previously described protective sheath covering the end portions of the electrical grounding conductor.

According to an embodiment, each of the individually insulated multi-strand wires has a diameter from 0.3 mm to 3.0 mm, preferably from 1.0 mm to 2.0 mm. Similar to the number of insulated multi-strand wires, the diameter of the insulated multi-strand wires may be adapted to the specific application and/or system. Since the use of multiple individually insulated multi-strand wires is intended for also mitigating the skin effect. The diameter of the individually insulated multi-strand wires may be also selected in accordance with the frequency bandwidth. It is generally preferred to use a smaller diameter for higher frequency bandwidths.

The metal structures interconnected by the electrical grounding conductor are usually distanced from each other, especially when they exhibit relative movement. Consequently, a length of the individually insulated wires should be selected considering the distance between these metal structures. In an embodiment, each of the individually insulated wires has a length from 100 mm to 300 mm, preferably a length from 120 mm to 180 mm. A total length of the electrical grounding conductor is also influenced by the type and size of the first and second terminals which are typically chosen based on a connection point of the metal structure with the terminal. For instance, a flat surface might need a different type of terminal compared to a shaft.

In an embodiment, a total conducting perimeter of the electrical grounding conductor corresponds to the combined perimeters of cross-sections of all the individually insulated multi-strand wires. The electrical grounding conductor may have a total conducting perimeter that is defined by the sum of the perimeters of the cross-sections of all the individually insulated wires. Since the electrical grounding conductor offers the advantage of having a simple structure, the total conducting perimeter can serve as an adequate and simplified indication of effective conduction, providing sufficient surface area for the AC to be conducted with low impedance. This simplifies the adaptation of the electrical grounding conductor to a specific application since it focuses on the overall perimeter rather than a more complex determination of skin depth, which varies with frequency and material properties. In preferred embodiments, the total conducting perimeter of the electrical grounding conductor 110 is from 2 mm to 100 mm, more preferably from 10 mm to 50 mm.

In a further embodiment, the electrical grounding conductor may have a total conducting perimeter-to-length ratio of approximately 1:7, that is the length being 7 times the total conducting perimeter. This ensures low impedance at high frequencies and provides a balance between a resultant total cross sectional area of the electrical grounding conductor, used for conduction of signals, and its length, particularly for applications in the automotive industry. In other embodiments, the electrical grounding conductor may have other perimeter-to-length ratio depending on the application. For example, the length of the grounding conductor may be approximately 2 to 6 times its total conducting perimeter, or approximately 8 to 15 times its total conducting perimeter.

In an embodiment, the total conducting perimeter is approximately equal to a perimeter of a cross section of a typical braided strap for grounding having a length similar to that of the individually insulated wires. This configuration allows the electrical grounding conductor to achieve impedance similar to that of a braided strap typically used for a specific application and/or system in a vehicle, at a similar bandwidth.

According to another aspect, and in accordance with the advantages described above, the current disclosure further relates to a grounding system for a vehicle comprising at least a first ground structure and a second ground structure, each ground structure providing electrical reference to one or more electrical components, wherein the first ground structure and the second ground structure are electrically connected to each other by an electrical grounding conductor as described above or hereinafter. In this context, the first and second ground structures may be metallic parts of the vehicle, e.g., the chassis, and respectively forming a first and second ground plane. The electrical grounding conductor connects the first ground structure to the second ground structure, resulting in low impedance between them. This connection causes the first and second ground planes to function as a single unified ground plane within the grounding system.

According to another aspect, a vehicle comprises the grounding system as described above. Such a vehicle ensures that metallic body parts have similar potentials providing electrical safety and electromagnetic compatibility.

According to a further aspect, and in accordance with the advantages described above, the current disclosure further relates to a method for grounding a vehicle, wherein the vehicle comprises a grounding system comprising a first ground structure and a second ground structure, each ground structure providing electrical reference to one or more electrical components of the vehicle, the method comprising connecting the first ground structure to a first terminal of an electrical grounding conductor as described above or hereinafter; and connecting the second ground structure to a second terminal of the electrical grounding conductor.

**Brief Description of Drawings**

Figure 1 schematically illustrates a grounding system for a vehicle comprising an electrical grounding conductor according to the disclosure;

Figure 2A schematically illustrates the electrical grounding conductor of Fig. 1 and in accordance with an embodiment of the disclosure.

Figure 2B shows an example of an electrical grounding conductor with a protective sheath according to an embodiment of the disclosure.

Figure 2C shows another example of an electrical grounding conductor with a protective sheath.

Figure 3 schematically illustrates a cross-section of the electrical grounding conductor of Fig. 2A.

Figure 4A illustrates schematically an example in the prior art of a metal braided strap.

Figure 4B schematically illustrates a conducting area of the metal braided strap of Fig. 4A.

Figure 5 shows results of a test relatively comparing the impedance of the electrical grounding conductor with a typical metal braided strap.

**Description of Embodiments**

The following is a description of certain embodiments of the present disclosure, given by way of example only and with reference to the figures.

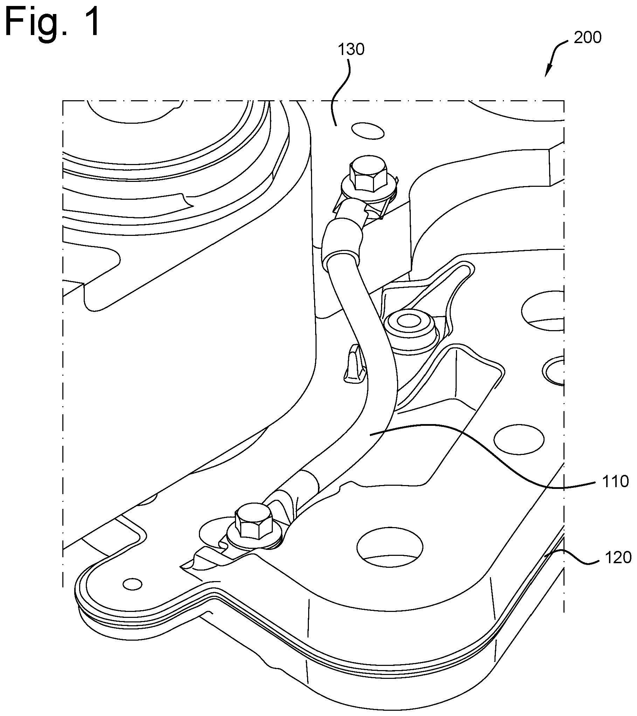

Figure 1 schematically illustrates a grounding system 200 for a vehicle. The grounding system comprises at least a first ground structure 120 and a second ground structure 130. These grounding structures typically refer to metallic components of the vehicle, such as the chassis, which serve as electrical references for one or more electrical components mounted on or connected to them (not shown). For instance, the first ground structure 120 could represent the chassis frame, while the second ground structure 130 might denote another metallic part of the vehicle, such as the engine block or transmission housing. Examples of electrical components that rely on the grounding system may include the engine control unit, anti-lock braking system (ABS), and various sensors such as wheel speed sensors, throttle position sensors, airbag sensors, etc.

The first ground structure 120 and the second ground structure 130 are interconnected electrically by an electrical grounding conductor 110 that ensures that electrical continuity is maintained between the different ground structures of the vehicle. By facilitating this connection, the electrical grounding conductor 110 allows the first and second ground structures 120, 130 to function collectively as a unified ground plane. This unified ground plane is essential for achieving effective electromagnetic compatibility (EMC) performance in the vehicle. In the depicted example, the electrical grounding conductor 110 connects grounding structures 120, 130 that move relative each other. To account for this relative movement, the electrical grounding conductor 110 is arranged forming an S-shape, with its length slightly longer the distance between the grounding structures 120, 130, in their specific shown position if Fig. 1.

The electrical grounding conductor 110 acts as a pathway for electrical alternating currents (AC) to flow with low impedance between the various metallic components of the vehicle. This flow of AC ensures that any electrical disturbances or signals generated within the vehicle are effectively distributed and managed across the unified ground plane. As a result, the vehicle's EMC performance is enhanced, reducing the likelihood of electromagnetic interference (EMI) issues that could otherwise disrupt the proper functioning of sensitive electronic systems within the vehicle.

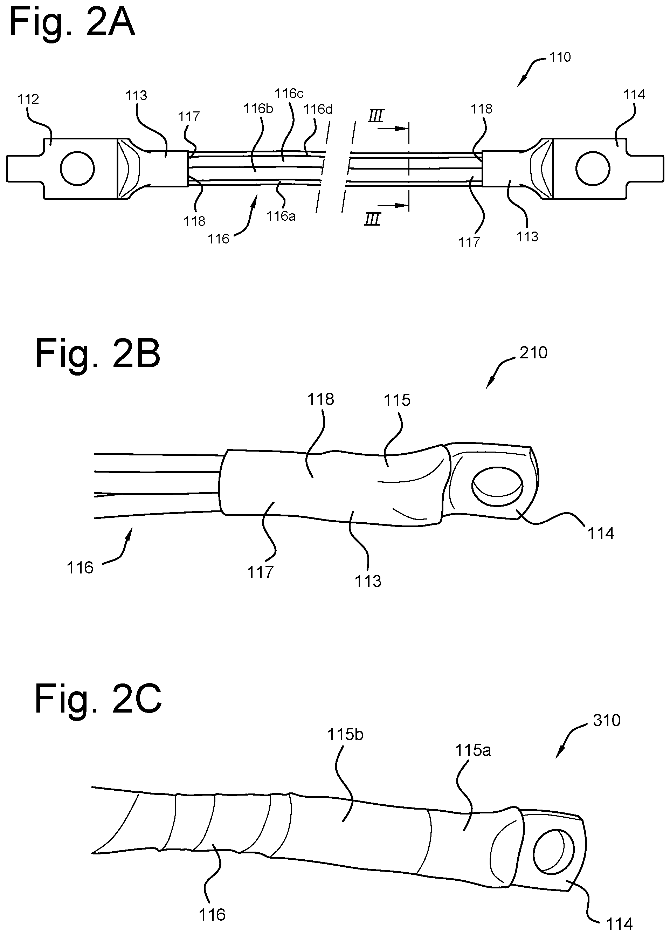

Figure 2A schematically illustrates the electrical grounding conductor of Fig. 1 and in accordance with an embodiment of the disclosure. The electrical grounding conductor 110 comprises a first terminal 112; a second terminal 114; and a plurality of individually insulated wires 116 electrically connected in parallel between the first terminal 112 and the second terminal 114. In the depicted embodiment, the electrical grounding conductor 110 is positioned in a straight neutral position. Each of the individually insulated multi-strand wires 116 has approximately the same length (l) and diameter (d) with respect to each other and are aligned parallel to each other as a bundle without twisting of the bundle. The skilled person will understand that the electrical grounding conductor 110 may only keep the neutral position after manufacture and before use, or during use assuming there is not relative movement of the grounding structures. Due to intrinsic flexibility of the insulated wires 116, they may adapt other orientations or may bend or slightly twist during use.

Twisting of the bundle at the neutral position is often beneficial to reduce electromagnetic interference by canceling out electromagnetic fields generated by adjacent wires carrying differential signals. However, in the case of the electrical grounding conductor 110, which does not conduct differential signals, twisting of the bundle of wires at the neutral position is unnecessary. The individually insulated wires 116 meet with one another at least at the position of the terminals 112, 114, thus, an outer surface of an insulated wires 116 may contact at least an outer surface other individually insulated wire 116 along its length.

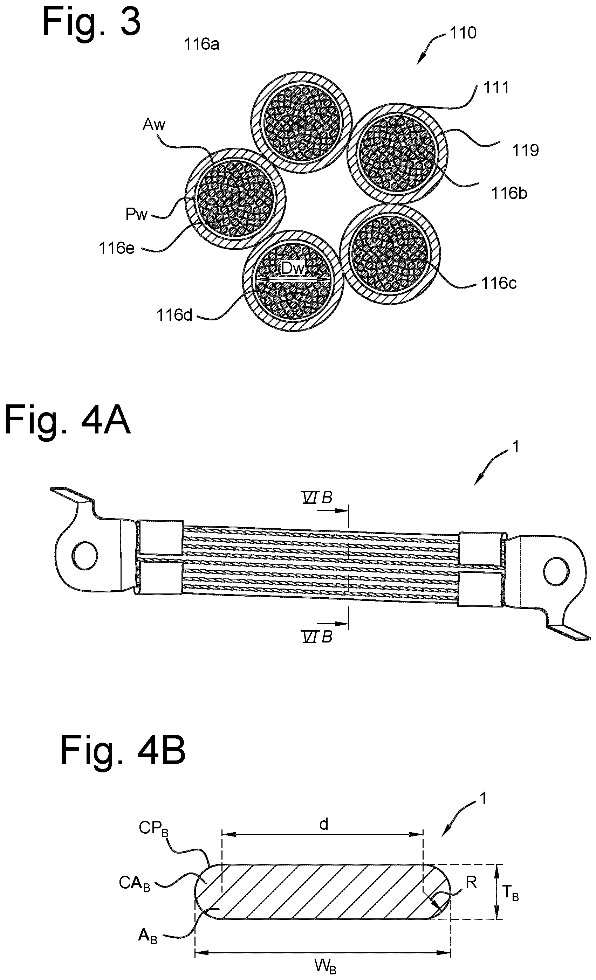

Each of the first and second terminals 112, 114 comprises an end portion 113 connecting with a respective end section 117 of each of the individually insulated wires 116 at interfaces 118. The insulated wires 116 are bundled at least at the interfaces 118, giving the interfaces 118 a cross-sectional boundary with a compact shape, e.g., circular, square, pentagonal etc. (see also Fig. 3). When the insulated wires 116 are bundled at the interfaces 118, it easier to use various types of terminals, particularly to further ensure the electrical conductivity between the conductive core of the wires 116 and the terminals 112, 114. The insulation at the tips of the insulated wires 116 may be removed to further facilitate this electrical conductivity and further improve the grounding function. Examples of terminals include crimp terminals, screw terminals, and compression terminals, which can be selected to suit different applications and installation requirements. In the depicted embodiment, are crimped into the end portions 113 of the first and second (crimp) terminals 112, 114 terminals thereby forming electrical connection between the individually insulated wires 116 the terminals 112, 114 (see also Fig. 2B). Alternatively, the end sections 117 of the individually insulated wires 116 are connected to the terminals 112, 114 by metal welding or soldering methods. For instance, welding methods like resistance welding or ultrasonic welding, and soldering methods such as reflow soldering or wave soldering, can be employed to create secure and reliable interface 118 between the terminals 112, 114 and the insulated wires 116. The skilled person will understand that while it is preferred to have a compact shape for the cross-sectional boundary of the interfaces 118, an elongated or open shape of the cross-sectional boundary is certainly possible and might be more suitable for more specific applications.

Figure 2B shows an example of an electrical grounding conductor 210 with a protective sheath 115 according to an embodiment of the disclosure. The protective sheath 115 covers the interfaces 118, the end portion 113 of the second terminal 114, and the respective end section 117 of the individually insulated wires 116. The protective sheath 115 comprises a heat shrink tubing with adhesive or glue applied underneath the heat shrink tubing. Figure 2C shows another example of an electrical grounding conductor 310 with the protective sheath 115, which includes a first protective sheath 115a similar to that in Fig. 2B, and a second protective sheath 115b comprising a textile tape that partially covers the first protective sheath 115a and an additional length of the insulated wires 116 (thus the insulated wires 116 are not visible in this figure).

The electrical grounding conductor 110 effectively mitigates skin effects by using the plurality of individually insulated wires 116 connected in parallel to the first and second terminals 112, 114. Skin effect refers to the tendency of an alternating current (AC) to distribute within a conductor, with the highest current density occurring near the surface of the conductor. This effect diminishes with greater depths within the conductor and intensifies with increasing AC frequency, particularly at high frequencies, for example above 100 kHz, which are high frequencies commonly used in the automotive industry. By distributing the total AC among the insulated wires 116, the electrical grounding conductor 110 minimizes the skin effect in each wire, resulting in a relatively small impedance of maximally 5 ohms per 300 mm of the electrical grounding conductor at high frequencies, for example, up to 10 MHz. The insulation of the wires 116 effectively creates a situation where the AC current is forced to flow through the entire cross-section of each wire 116, reducing the concentration of current near the surface of the insulated wires 116 and thus mitigating the skin effect.

For determining the number and/or diameter of the insulated wires 116, first it should be considered the specific application that may include factors such as the bandwidth of signals to be conducted, the distance between grounding structures, potential relative movement between grounding structures, and the nature of such movement, e.g., linear or rotational movement, vibration, etc. Other considerations for grounding these structures may include environmental conditions, such as temperature and humidity, mechanical stresses, such as impacts, and electrical interference from nearby sources, such as power lines or electromagnetic radiation.

Depending on the application, it may be possible to either fix the number of insulated wires 116 and calculate their diameter, or vice versa. For example, if the electrical grounding conductor 110 is to be placed in an environment with relatively low mechanical stress but will be used with very high frequencies, e.g., higher than approximately 20 MHz, having a higher number of insulated wires with a small diameter may be preferable. Conversely, in applications where the grounding conductor is subject to significant mechanical stress, such as in areas with constant vibration or potential physical impact, fewer insulated wires with larger diameters might be chosen to ensure both mechanical robustness and adequate electrical performance. Other factors to consider might include the thermal environment, where high temperatures could influence the choice of insulation material, or the presence of corrosive elements, which might necessitate additional protective sheathing or specific material choices for the wires.

Secondly, the number and diameter of the insulated wires 116 should be chosen such that the impact of the skin effect is minimized. For that, the skin depth should be sufficient for maintaining low impedance within the specific bandwidth being used. The skin depth is the cross-sectional depth in the wire where the AC is effectively conducted. However, determining the skin depth may be complicated since it depends on intrinsic variables of the conducting material such as its resistivity and permeability. Furthermore, determining skin depth at higher frequencies becomes even more complicated as more intrinsic properties of the conductor play a role, such as its permittivity. For example, at frequencies above 100 MHz, the permittivity of the material can significantly affect the skin depth, requiring precise calculations and material considerations to precisely determine the skin depth.

It has been found that instead of relying on the skin depth, a total conducting perimeter $(CP_C)$ of the electrical grounding conductor may serve as an adequate and simplified indication of effective conduction at certain bandwidths, providing sufficient surface area for the AC to be conducted with low impedance.

Figure 3 schematically illustrates a cross-section of the electrical grounding conductor 110 of Fig. 2A, corresponding to a cross-section of the individually insulated multi-strand wires 116a-116e. Each insulated wire 116 has an insulation outer layer 119, which can be made from materials such as PVC (polyvinyl chloride), Teflon (PTFE), rubber, etc., and a conducting core 111 with diameter $D_W$, comprising a conducting material such as copper, aluminum, tinned copper, etc. The electrical conductor 110 may be referred to as a multi-strand wire. The conductive core 111 of each multi-strand wire 116a-e comprises a plurality of conductive strands without individual insulation as illustrated in Figure 3. This bundle of conductive strands can be conductively treated as one conductive core. Similar to the interface 118, the electrical grounding conductor 110 may have a cross-sectional boundary with a compact shape at a central region in the neutral position. Because the electrical grounding conductor 110 comprises only a few individually insulated wires 116 and because they are not required to be in close proximity to each other along their entire length, a total conducting area $(CA_C)$ of the electrical grounding conductor 110 corresponds approximately to a sum of the cross-sectional areas $(A_W)$ of all of the individually insulated wires 116. Correspondingly, a total conducting perimeter $(CP_C)$ of the electrical grounding conductor 110 corresponds approximately to a sum of the perimeters $(P_W)$ of the cross-sectional areas $(A_W)$ of all of the individually insulated wires 116. Thus, if the total conducting perimeter $(CP_C)$ for a specific application is known, either the number (n) or diameter $(D_W)$ of insulated wires 116 may be set (according to mechanical/environmental conditions set out above) and the other $(D_W$ or n) can be easily calculated. For instance $D_W = \frac{CP_C}{\pi n}$ or $n = \frac{CP_C}{\pi D_W}$. The total conducting perimeter $(CP_C)$ of the electrical grounding conductor 110 may be from 2 mm to 100 mm, preferably from 12 mm to 50 mm.

The total conducting perimeter $(CP_C)$ for a specific application can be determined or estimated using a total conducting perimeter-to-length ratio, which is the ratio between the total conducting perimeter $(CP_C)$ of the electrical grounding conductor and its length, particularly the length of the insulated wires 116. In this method, the total conducting perimeter $(CP_C)$ is determined based on the distance between grounding structures or the path to be followed by the electrical grounding conductor between the grounding structures (see Fig. 1). For instance, in automotive industry applications, it has been found that advantageously the electrical grounding conductor may have a total conducting perimeter-to-length ratio of approximately 1:7, meaning the length is about 7 times the total conducting perimeter $(CP_C)$. This ratio is often present in metal braided straps typically used for automotive applications. However, this ratio can vary. In other applications, the length may be approximately 3 to 6 times its total conducting perimeter $(CP_C)$, or approximately 8 to 15 times its total conducting perimeter (CPC). For example, to minimize impedance for a certain preferred length (e.g., based on distance and/or movement between grounding structures) a smaller total conducting perimeter-to-length ratio, for example 1:5, may be chosen.

The use of the total conducting perimeter-to-length ratio may serve as a starting point to approximate the total conducting perimeter $CP_C$). However, in some applications, other factors may be more relevant than the distance between grounding structures. For example, the electrical grounding conductor may need to be more flexible if the grounding structures move relative to each other. In such cases, the number of insulated wires and/or their diameter may be first selected to meet this primary requirement, even if it results in a slightly different total conducting perimeter $(CP_C)$ obtained using the total conducting perimeter-to-length ratio. After that, the length of electrical grounding conductor and/or the insulated wires may be optionally adjusted according to the total conducting perimeter-to-length ratio.

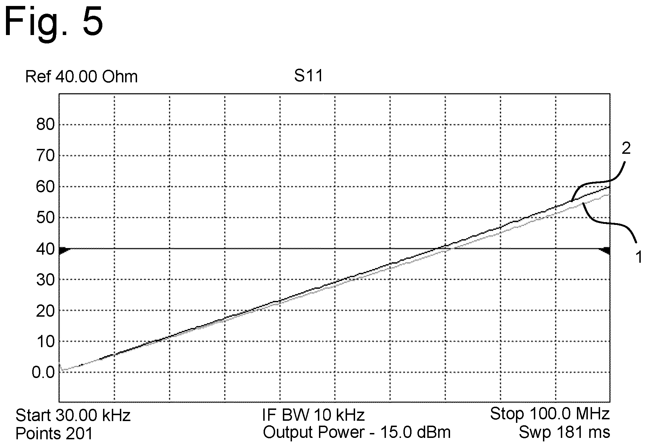

Tests revealed that the grounding conductor 110 can achieve low impedance comparable to a braided strap with the same length when the total conducting perimeter $(CP_C)$ of the electrical grounding conductor 110 is similar to a conducting perimeter $(CP_B)$ of a commonly used metal braided strap (see Fig. 5). Figure 4A illustrates schematically an example in the prior art of a metal braided strap having approximately 18 mm width $(W_B)$ and 1.2 mm thickness $(T_B)$. Braided straps consist of many insulated strands woven together in a precise pattern to achieve low impedance for grounding purposes. The arrangement of the strands ensures that the AC current is distributed among the strands, such as a total cross sectional area $(A_B)$ of the braided strap is used for conduction of the AC, thereby reducing the skin effect. Despite their effectiveness, braided straps may provide issues such as corrosion and limited flexibility.

Figure 4B schematically illustrates a conducting area $(CA_B)$ of the metal braided strap 1 of Fig. 4A. A shape of a conducting area $(CA_B)$ is simplified as a capsule shape consisting of a rectangle with semicircles on its shorter edges. As mentioned before, in the case of the braided strap 1, the conducting area $(CA_B)$ corresponds approximately to the cross-sectional area $(A_B)$ of the braided strap. Therefore, the conducting area ($CA_B$) has a total conducting perimeter ($CP_B$), that can be defined as follows:

$$R = \frac{T_B}{2}$$

$$d = W_B - 2R$$

$$CP_B = 2\pi R + 2d$$

wherein $T_B$ is the thickness of the braid, $W_B$ is the width of the braid, R is the radius of the semicircles and d is the distance between the semicircles (d).

Figure 5 shows results of a test relatively comparing the impedance of the electrical grounding conductor with a typical metal braided strap (e.g., Fig. 4A). The comparison was conducted using a Vector Network Analyzer (VNA) to measure S11. The test fixture consisted of a piece of sheet metal with two screws: one screw was connected to the center pin of an N-type bulkhead connector, and the other screw was connected directly to the sheet metal. Either the electrical grounding conductor or the metal braided strap was connected between the two screws, shorting the center pin to ground (GND). The impedance of the electrical grounding conductor or the metal braided strap to ground was then measured over a frequency range of 30 kHz to 100 MHz. The results shown in Fig. 5 indicate that the electrical grounding conductor 2 and the metal braided strap 1 exhibit similar performance.

The electrical grounding conductor used in the test of Fig. 5 comprised seven insulated multi-strand wires, each with an area of approximately 0.75 mm$^2$, a diameter of approximately 0.97 mm, and a perimeter of 3.07 mm. Each multi-strand wire is here treated as having a single conductive core when determining the conducting perimeter of the wire. Therefore, the total conducting perimeter ($CP_C$) of the electrical grounding conductor was approximately 21.5 mm. The metal braided strap had a width of approximately 10 mm and a thickness of 1.5 mm, resulting in a total conducting perimeter (CPB) of 23 mm. The electrical grounding conductor and the metal braided strap had approximately the same length.

The total conducting perimeter ($CP_C$) of the electrical grounding conductor for a specific application can be determined or estimated by referencing the metal braided strap typically used in that specific application. First, the total conducting perimeter ($CP_B$) of the metal braided strap may be calculated. Subsequently, the total conducting perimeter ($CP_C$) of the electrical grounding conductor can be matched to the total conducting perimeter ($CP_B$) of the metal braided strap.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure is not limited to the particular embodiments disclosed, but that the disclosure will include all embodiments falling within the scope of the appended claims.

Claims

1. An electrical grounding conductor for a vehicle, the electrical grounding conductor comprising:

   a first terminal and a second terminal, the first and second terminals being electrically conductive; and
   a plurality of individually insulated multi-strand wires electrically connected in parallel between the first terminal and the second terminal; wherein each individually insulated multi-strand wire comprises a plurality of individual strands arranged in parallel.

2. The electrical grounding conductor according to claim 1, wherein each of the plurality of individually insulated multi-strand wires has substantially the same diameter and length.

3. The electrical grounding conductor according to claim 1 or claim 2, wherein the electrical grounding conductor has an impedance of less than 10.0 ohms per 300 mm at high frequencies, preferably within a bandwidth from 10 MHz to 100 MHz, and/or less than 5.0 ohms per 300 mm within a bandwidth from 150 kHz to 10 MHz.

4. The electrical grounding conductor according to any preceding claim, wherein the plurality of individually insulated multi-strand wires are arranged in parallel to each other between the first and the second terminal without weaving or interlacing; and/or wherein in a straight neutral position of the electrical grounding conductor, the plurality of individually insulated multi-strand wires are aligned parallel to each other as a bundle without torsional deformation of the bundle.

5. The electrical grounding conductor according to any preceding claim, wherein an outer surface of each of the individually insulated multi-strand wires contacts at least an outer surface of one of the other individually insulated multi-strand wires, preferably at an end section of the multi-strand wires.

6. The electrical grounding conductor according to any preceding claim, wherein an end portion of the first and second terminal connect with a respective end section of each of the individually insulated multi-strand wires at an interface; and wherein the individually insulated multi-strand wires are bundled at least at the interface, more preferably conductive cores of the insulated multi-strand wires are bundled at the interface.

7. The electrical grounding conductor according to claim 6, further comprising a protective sheath covering at least the end portion of the first and second terminal and the respective end section of the individually insulated wires, thereby providing a watertight connection between the first and second terminals and the individually insulated wires.

8. The electrical grounding conductor according to any preceding claim, wherein the electrical grounding conductor comprises 2 to 15 individually insulated multi-strand wires, preferably 4 to 10 individually insulated multi-strand wires; and/or wherein each of the individually insulated multi-strand wires has a diameter from 0.3 mm to 3.0 mm, preferably from 1.0 mm to 2.0 mm.

9. The electrical grounding conductor according to any preceding claim, wherein the grounding conductor comprises a wrapped insulating cover configured to hold the plurality of individually insulated multi-strand wires together.

10. The electrical grounding conductor according to claim 9, wherein the insulating cover is a woven tape.

11. The electrical grounding conductor according to any one of the preceding claims, wherein a total conducting perimeter of the electrical grounding conductor corresponds to the combined perimeters of cross-sections of all the individually insulated wires, preferably the total conducting perimeter is from 2 mm to 100 mm, more preferably from 10 mm to 50 mm, and wherein electrical grounding conductor has a total conducting perimeter-to-length ratio of approximately 1:7.

12. The electrical grounding conductor according to claim 11, wherein the total conducting perimeter is approximately equal to a perimeter of a cross section of a typical braided strap for grounding having a length similar to that of the individually insulated multi-strand wires.

13. A grounding system for a vehicle comprising at least a first ground structure and a second ground structure, each ground structure providing electrical reference to one or more electrical components, wherein the first ground structure and the second ground structure are electrically connected to each other by an electrical grounding conductor according to any of the preceding claims.

14. A vehicle comprising the grounding system according to claim 13.

15. A method for grounding a grounding system of a vehicle, wherein the grounding system comprises: a first ground structure and a second ground structure, each ground structure providing electrical reference to one or more electrical components of the vehicle, the method comprising:

connecting the first ground structure to a first terminal of an electrical grounding conductor according to any of claims 1 to 12; and connecting the second ground structure to a second terminal of the electrical grounding conductor.

# Fig. 1

## Fig. 2A

## Fig. 2B

## Fig. 2C

# Fig. 3

116a

110

111

Aw

119

Pw

116b

116e

Dw

116c

116d

# Fig. 4A

1

VIB

VIB

# Fig. 4B

1

CP_B

d

CA_B

R

$T_B$

$A_B$

$W_B$

# Fig. 5

Ref 40.00 Ohm · · · · · · · · · · · · · · · · · · · S11

Start 30.00 kHz · · · · · · · · · · IF BW 10 kHz · · · · · · · · · · Stop 100.0 MHz
Points 201 · · · · · · · · · · · · · · Output Power - 15.0 dBm · · · · · · · Swp 181 ms

Europäisches
Patentamt
European
Patent Office
Office européen
des brevets

# EUROPEAN SEARCH REPORT

**Application Number**

EP 25 18 7303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 056064 A (NISHINIPPON RYOKAKU TETSUDO KK; RAILWAY TECHNICAL RES INST ET AL.) 5 April 2018 (2018-04-05) | 1-6,8, 11,12,15 | INV. H01B7/30 H01B7/00 |
| Y | * paragraphs [0001], [0019], [0030], [0031] of the machine translation; figure 2A * | 13,14 | B60R16/02 |
| | ----- | | ADD. H01R4/64 |
| X | US 2019/312439 A1 (COTTRELL DANIEL [US] ET AL) 10 October 2019 (2019-10-10) * paragraphs [0096], [0101]; figures 4a, 4b * | 1-7,9-12 | H01R11/12 |
| | ----- | | |
| Y | CN 211 376 227 U (QINGDAO SHENSHENG RAIL EQUIPMENT CO LTD) 28 August 2020 (2020-08-28) * claim 1; figure 1 * | 13,14 | |
| | ----- | | |

**TECHNICAL FIELDS SEARCHED (IPC)**

H01B
H01R
B60R

The present search report has been drawn up for all claims

| Place of search | Date of completion of the search | Examiner |
|---|---|---|
| The Hague | 31 October 2025 | Alberti, Michele |

EPO FORM 1503 03.82 (P4C01)

## ANNEX TO THE EUROPEAN SEARCH REPORT
## ON EUROPEAN PATENT APPLICATION NO.

EP 25 18 7303

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2025

| Patent document cited in search report | | Publication date | Patent family member(s) | | Publication date |
|---|---|---|---|---|---|
| JP 2018056064 | A | 05-04-2018 | JP | 6632954 B2 | 22-01-2020 |
| | | | JP | 2018056064 A | 05-04-2018 |
| US 2019312439 | A1 | 10-10-2019 | NONE | | |
| CN 211376227 | U | 28-08-2020 | NONE | | |

EPO FORM P0459

For more details about this annex : see Official Journal of the European Patent Office, No. 12/82